# EUROPEAN PATENT APPLICATION

(11) **EP 4 309 552 A1**
(43) Date of publication of application: **24.01.2024**
(21) Application number: 23187018.9
(22) Date of filing: 21.07.2023
(51) Int. Cl.: A47J 39/00

(54) **CABINET FOR HOLDING FOOD PRODUCTS**

(30) Priority: 22.07.2022 US 202263391369 P; 15.01.2023 US 202363521218 P
(71) Applicant: Carter-Hoffmann LLC, Mundelein, IL 60060 (US)
(72) Inventor: GUTIERREZ, Juan, Mundelein, IL 60060 (US); PUSHPALA, Sreekanth, Mundelein, IL 60060 (US)
(74) Representative: BRP Renaud & Partner mbB Rechtsanwälte Patentanwälte Steuerberater

(57) **Abstract**

A cabinet for holding a plurality of food products is provided and includes a housing this formed with a plurality of outer walls and establishes a holding volume and an air handling volume. The holding volume includes a plurality of discrete holding areas, wherein each of the discrete holding areas are configured to receive a food product therein and an air flow path between the air handling volume and the holding volume. The housing includes an inner bottom wall that is spaced from the lower wall to allow air to flow therethrough, the inner bottom wall includes a plurality of apertures to direct air to return to the holding volume from the air handling volume.

## Description

### CROSS-REFERENCE TO RELATED APPLICATIONS

This application claims priority from United States Provisional Application Number 63/391,369, filed July 22, 2022 and United States Provisional Application Number 63/521,218, filed June 15, 2023, the entirety of each are hereby fully incorporated by reference herein.

### TECHNICAL FIELD

This disclosure relates to holding cabinets for food products, such as food products that are position to be assembled in a quick service restaurant.

It is an object of the present invention to show new ways in the development of cabinets for food products.

This object is achieved by the subject of the independent patent claim 1.

Preferred embodiments of the invention are subject of the dependent claims.

The cabinet according to the invention comprises a housing that is formed with a plurality of outer walls, the plurality of outer walls include left and right walls, an upper wall, a lower wall, and a rear wall, the housing establishes a holding volume and an air handling volume. Further, the cabinet comprises a front opening that allows communication into the holding volume.

The holding volume includes a plurality of discrete holding areas, wherein each of the discrete holding areas are configured to receive a food product therein. The housing forms an upper flow path that draws suction from the holding volume, directs air through the air handling volume, and returns air to the holding volume. Furthermore, the housing includes an inner bottom wall that is spaced from the lower wall to allow air to flow there through, the inner bottom wall includes a plurality of apertures to direct air to return to the holding volume from the air handling volume, wherein each of the plurality of apertures are in communication with a louver that directs air flowing into the holding volume in a specific direction. According to the invention, the cabinet further comprises a storage volume provided upon the housing and in gaseous communication with the air handling volume, wherein the storage volume is configured to receive and store water therewithin, wherein the storage volume is further configured to create a humid environment with water vapor traveling into the air handling volume.

According to a preferred embodiment of the invention, the storage volume supports a nebulizer that interacts with the with water stored therein, wherein operation of the nebulizer creates the humid environment within the air within the storage volume above the water.

According to an advantageous further development the storage volume receives a level probe, wherein the level probe can identify a low water level condition thereby causing more water to be directed into the storage volume and the level probe can identify a high water level condition that stops water from being directed into the storage volume.

According to another advantageous further development, further comprising a heater disposed within the storage volume to interact with the water disposed within the storage volume.

Particularly preferred, the air handing volume includes at least one fan, wherein the at least one fan takes suction from air that flows into the air handling volume from the holding volume, wherein during fan operation air flows across an opening in communication with the storage volume, wherein air flow across the opening causes relatively air from the storage volume to mix with the air flowing across the opening and be urged to reenter the air handling volume.

According to a preferred embodiment the plurality of apertures are organized to be positioned along three parallel lines that each extend from proximate to the outer left wall to proximate to the outer right wall, wherein a first of the lines is positioned proximate to the front opening of the holding volume, a second is positioned proximate to the rear wall, and a third that is positioned between the first and second lines. In this embodiment, the louvers associated with each of the plurality of apertures along the first line are each positioned to direct air that leaves the louver into the holding volume with a vector component that is parallel to the first line and also with a vector component that is pointed toward the rear wall, wherein the louvers associated with each of the plurality of apertures along the second line are positioned to direct air that leaves the louver into the holding volume in a direction toward one of the right or left outer walls, and the louvers associated with each of the plurality of apertures along the second line are positioned to direct air that leaves the louver into the holding volume in a direction toward the other of the right or left outer walls than the outer wall that the louvers along the second line directed air to.

According to another preferred embodiment, the plurality of apertures is organized to be positioned along a plurality of parallel lines that each extend from proximate to the outer left wall to proximate to the outer right wall, wherein a first line of the plurality of parallel lines is positioned proximate to the front opening of the holding volume and a second line of the plurality of parallel lines is positioned proximate to the rear wall. According to this embodiment, the louvers associated with each of the plurality of apertures along the first line are each positioned to direct air that leaves the louver into the holding volume in a direction toward one of the right or left walls and the louvers associated with each of the apertures along the second line are positioned to direct air that leaves the louver into the holding volume in a direction toward the other of the right or left outer walls.

Preferably, the plurality of apertures is organized to be positioned along a plurality of parallel lines that each extend from proximate to the outer left wall to proximate to the outer right wall, wherein a first line of the plurality of parallel lines is positioned proximate to the front opening of the holding volume and a second line of the plurality of parallel lines is positioned proximate to the rear wall.

According to another advantageous further development, a front end portion of the inner bottom wall comprises a plurality of first apertures that are each aligned along a line that extends from proximate to the outer left wall to proximate to the outer right wall, with each of the plurality of first apertures being adjacent to the front opening. According to this embodiment, the housing further includes an inner upper wall that is spaced from the upper wall of the housing to allow air flow therethrough to establish the upper flow path, wherein a front end portion of the inner upper wall comprises a plurality of second apertures that are spaced adjacently in a pattern between a position adjacent to the outer left wall and a position adjacent to the outer right wall, wherein the air flowing through the plurality of second apertures flows into the upper flow path. Furthermore , the upper flow path extends to a suction of a fan, wherein when operating the fan urges air to flow into the upper flow path, wherein air from each of the plurality of louvers and air from the plurality of first apertures flows into the plurality of second apertures.

According to a another preferred embodiment, the cabinet further comprises a plurality of pans that can be slidably received within the holding volume, each of the plurality of pans includes a planar holding surface and one or more side walls, wherein the holding surface includes a plurality of protuberances that extend upwardly from the planar holding surface to establish a set off distance between planar food products that rest upon the plurality of protuberances and the holding surface.

According to another preferred embodiment, the plurality of protuberances are arranged in a plurality of concentric circles.

Particularly preferably, the air that flows through the plurality of apertures flows from the space between the lower wall and the inner bottom wall from the air handling volume.

According to another preferred embodiment, the holding surface of each of the plurality of pans includes a plurality of apertures, the plurality of apertures upon each holding surface are arranged to form one or more circles that are concentric with the plurality of concentric circles of the plurality of protuberances.

According to another preferred embodiment, each of the plurality of pans includes a rear wall that faces and is parallel with a rear interior wall of the holding cabinet when each pan is installed, wherein the rear wall in each of the plurality of pans includes one or more apertures to allow air to pass therethrough.

According to another preferred embodiment, the air handling volume includes at least one fan, wherein the at least one fan takes suction from the holding volume and discharges air into the air handling volume.

According to another preferred embodiment, the air handling volume further comprises a set of walls that direct flow from each of the plurality of fans toward the lower wall, wherein a portion of the air flowing from the plurality of fans is directed to a space between the lower wall and the inner bottom wall, and a remaining portion of the air is directed through the inner rear wall that is forms a barrier of the holding volume and into the holding volume, wherein the plurality of fans take suction from the holding volume through the inner rear wall.

According to another preferred embodiment, the housing further comprises one or more horizontal shelves that are spaced from the bottom inner wall.

### BRIEF SUMMARY

A first representative embodiment of the disclosure is provided. The embodiment includes a cabinet for holding a plurality of food products. The cabinet includes a housing this formed with a plurality of outer walls, the plurality of outer walls include left and right walls, an upper wall, a lower wall, and a rear wall, the housing establishes a holding volume and an air handling volume and a front opening that allows communication into the holding volume. The holding volume includes a plurality of discrete holding areas, wherein each of the discrete holding areas are configured to receive a food product therein. The housing forms an air flow path that draws suction from the holding volume, directs air through the air handling volume, and returns air to the holding volume. The housing includes an inner bottom wall that is spaced from the lower wall to allow air to flow therethrough, the inner bottom wall includes a plurality of apertures to direct air to return to the holding volume from the air handling volume, wherein a first set of the plurality of apertures are aligned along a first line that extends in parallel to the left and right walls and a second set of the plurality of apertures that are aligned along a second line that extends in parallel to the left and right walls, wherein the first and second line are spaced from each other, and wherein the first line is positioned closer to the left wall than the right wall, and wherein the second line is positioned closer to the right wall that the left wall.

Another representative embodiment of the disclosure is provided. The embodiment includes a housing that is formed with a plurality of outer walls, the plurality of outer walls include left and right walls, an upper wall, a lower wall, and a rear wall, the housing establishes a holding volume and an air handling volume and a front opening that allows communication into the holding volume. The holding volume includes a plurality of discrete holding areas, wherein each of the discrete holding areas are configured to receive a food product therein. The housing forms an air flow path that draws suction from the holding volume, directs air through the air handling volume, and returns air to the holding volume, wherein a portion of the return air into the holding volume establishes a wind screen across a front opening of the holding volume. The housing includes an inner bottom wall that is spaced from the lower wall to allow air to flow therethrough, the inner bottom wall includes a plurality of apertures to direct air to return to the holding volume from the air handling volume, wherein a first set of the plurality of apertures are aligned along a first line that extends in parallel to the left and right walls and a second set of the plurality of apertures that are aligned along a second line that extends in parallel to the left and right walls, wherein the first and second line are spaced from each other, and wherein the first line is positioned closer to the left wall than the right wall, and wherein the second line is positioned closer to the right wall that the left wall; and a plurality of pans that can be slidably received within the holding volume, each of the plurality of pans includes a planar holding surface and one or more side walls, wherein the holding surface includes a plurality of protuberances that extend upwardly from the planar holding surface to establish a set off distance between planar food products that rest upon the plurality of protuberances and the holding surface, wherein the plurality of protuberances are arranged in a plurality of concentric circles.

Another representative embodiment is provided. The embodiment includes a cabinet for holding a plurality of food products. The cabinet includes a housing that is formed with a plurality of outer walls, the plurality of outer walls include left and right walls, an upper wall, a lower wall, and a rear wall, the housing establishes a holding volume and an air handling volume and a front opening that allows communication into the holding volume. The holding volume includes a plurality of discrete holding areas, wherein each of the discrete holding areas are configured to receive a food product therein. The housing forms an upper flow path that draws suction from the holding volume, directs air through the air handling volume, and returns air to the holding volume. The housing includes an inner bottom wall that is spaced from the lower wall to allow air to flow therethrough, the inner bottom wall includes a plurality of apertures to direct air to return to the holding volume from the air handling volume, wherein each of the plurality of apertures are in communication with a louver that directs air flowing into the holding volume in a specific direction. A storage volume is provided upon the housing and in gaseous communication with the air handling volume, wherein the storage volume is configured to receive and store water therewithin, wherein the storage volume is further configured to create a humid environment with water vapor traveling into the air handling volume.

Advantages of the present disclosure will become more apparent to those skilled in the art from the following description of the preferred embodiments of the disclosure that have been shown and described by way of illustration. As will be realized, the disclosed subject matter is capable of other and different embodiments, and its details are capable of modification in various respects. Accordingly, the drawings and description are to be regarded as illustrative in nature and not as restrictive.

### BRIEF DESCRIPTION OF THE DRAWINGS

FIG. 1 is a perspective view of a cabinet for holding food products.
FIG. 2 is a perspective sectional view of the cabinet of FIG. 1.
FIG. 3 is a perspective sectional detail view of the cabinet of FIG. 1, depicting a food product resting upon a tray disposed within the holding volume of the cabinet.
FIG. 4 is another perspective sectional view of the cabinet of FIG. 1, depicting schematically the air flow within the air handling volume of the housing.
FIG. 5 is perspective view of the cabinet of FIG. 1 with the top surfaces removed.
FIG. 6 is a bottom view of the cabinet of FIG. 1 with the bottom outer wall and the bottom inner wall removed and two pans installed within the cabinet.
FIG. 7 is a perspective view of the bottom inner wall of the cabinet.
FIG. 8 are perspective views of two trays that are usable within the cabinet.
FIG. 9 is a perspective view of another cabinet for holding food products.
FIG. 10 is a rear view of the cabinet of FIG. 10.
FIG. 11 is a rear view of the cabinet of FIG. 10 with the rear wall removed.
FIG. 12 is a side cross-sectional view of the housing of the cabinet of FIG. 9 depicting schematically the flow paths without the housing.
FIG. 13 is perspective cross-sectional view of the housing of the cabinet of FIG. 9.

### DETAILED DESCRIPTION OF THE PREFERRED EMBODIMENTS

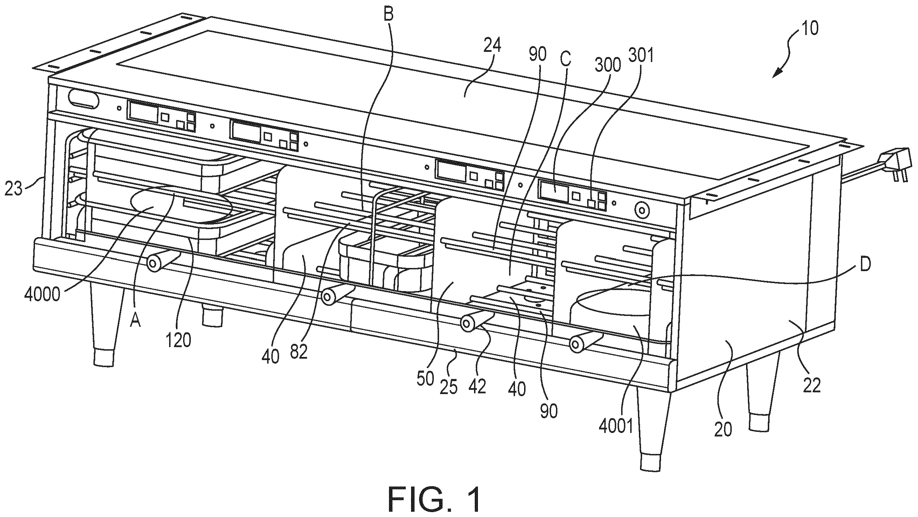

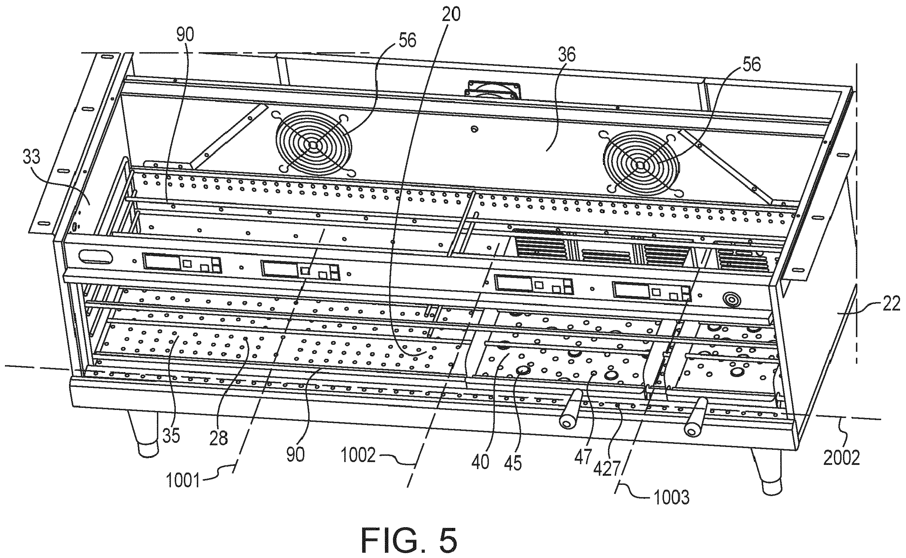

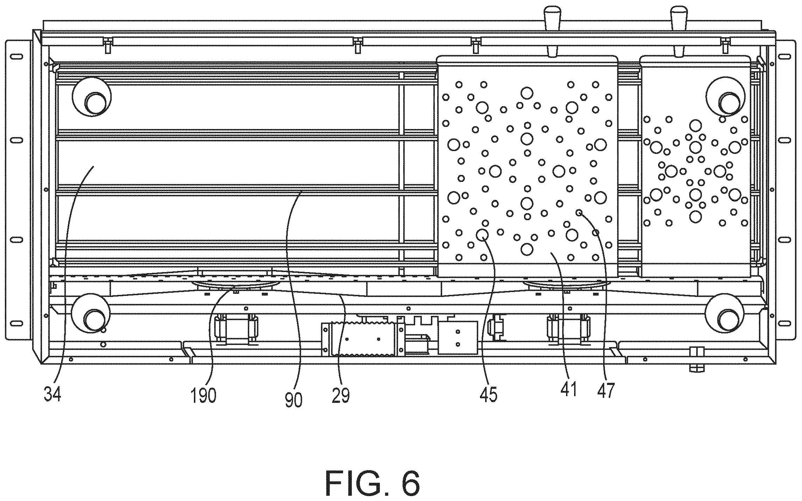

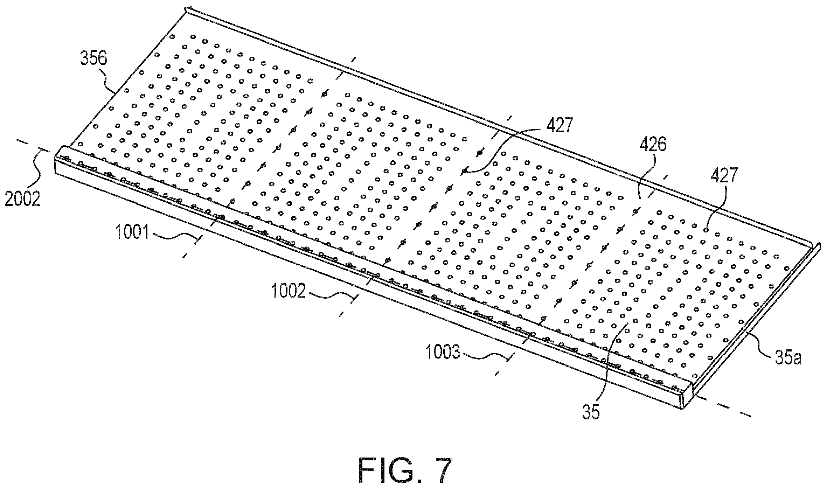

Turning now to FIGs. 1-8 a cabinet 10 for holding food products is provided. The cabinet 10 may be configured for any food products that are desired to be kept within a specific temperature range, such as heated above room temperature or cooled below room temperature. In other embodiments, the cabinet 10 may be configured to maintain food at room temperature, with the structural components that are discussed herein. The types of food products that can be stored within the cabinet 10 are numerous, and can be foods are needed to be kept in an organized fashion for quick and convenient food preparation, such as an a preparation line. In one embodiment, the cabinet may be provided for maintaining tortillas, both to maintain piles of unwrapped tortillas warm for near immediate use in a food preparation line and to also maintain packages of tortillas ready to be used when the current inventory of unwrapped tortillas has been depleted.

The cabinet 10 includes a housing 20 that includes the outer bounds of the cabinet and supports the structural components of the cabinet. The housing 20 includes right and left outer walls 22, 23, an upper wall 24, a lower wall 25, and a rear wall 26. These walls may be the outermost walls of the housing from the perspective of a user outside of the cabinet, while these walls may also include walls that are connected to and are closely aligned with the walls that form the outer surface of the housing 20. For example, a wall may comprise two parallel sheets of materials that are either in contact with each other, or are spaced from each other with an air gap or in some embodiments a gap that is filled with insulation and/or provides space for electrical wiring to pass through.

The housing 20 includes a holding volume 28 and an air handling volume 29. The holding volume 28 is the volume that may be temperature controlled and may include directed air flow therethrough, in order to condition the environment where the food products are maintained, both short term storage for near immediate use on a food preparation line and for longer term storage of inventory that will replace the food products in short term storage as needed. The air handling volume 29 includes one or a plurality of fans 190 and heaters 191 and/or cooling equipment 192 as discussed herein. The air handling volume 29 further forms one or more air flow paths from the fans 190, which draw suction from the holding volume 28 to return air (at a higher fan discharge pressure) to the holding volume 28.

The holding volume may be defined by inner walls that are disposed within the outer walls discussed above. Specifically, the holding volume 28 may be formed by inner right and left walls 32, 33, an inner upper wall 34, and inner lower wall 35, and an inner rear wall 36.

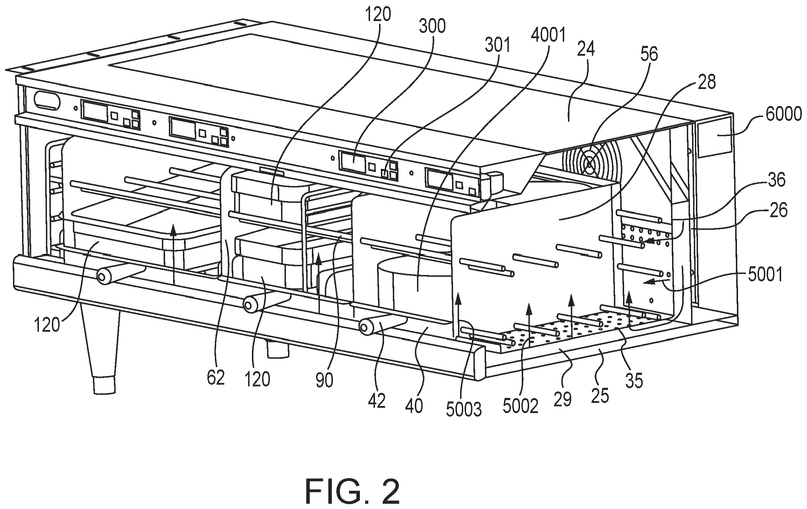

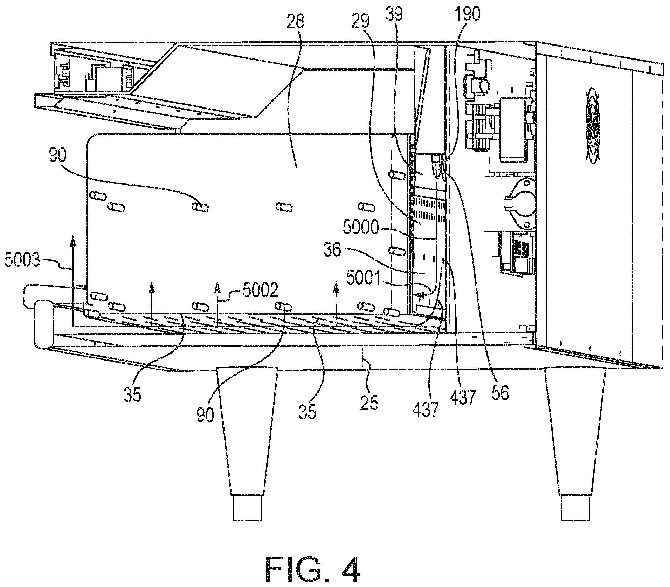

The inner rear wall 36 is best shown in FIGs. 2 and 4 and includes a plurality of apertures. The inner rear wall 36 includes one or more fan apertures 56 that are aligned with the center of each fan 190 that is located within the air handling volume 29 to allow each fan 190, when operating, to take suction from the holding volume 28. While the fan aperture 56 for each fan is titled in the singular each fan aperture 56 may be a single hole or may be a collection of small but closely spaced holes that collectively allow sufficient air to pass through for proper air flow. Small but closely spaced fan apertures 56, when provided, may each have a size or diameter (when circular) to prevent fingers from extending therethrough. The fan aperture 56 may be formed with a safety grate 57 disposed thereon that prevents fingers or large physical from extending through the fan aperture 56. The safety grate may be positioned within the volume of the holding volume 28 or within the air handling volume 29. In some embodiments, a safety cover may be provided. The safety cover may have openings that are along the outside edges of the safety cover and specifically in a space between the sides of the safety cover and the inner rear wall 36.

The inner rear wall 36 may include a plurality of return apertures 437 allow air that discharges the fan 190 to flow therethrough and flow into the holding volume 28, as the air is directed to flow generally downward from the fan 190 discharge within the air handling volume 29 due to the physical structure surrounding the fans 190 (as shown schematically by arrow 5001). As discussed herein, the number, size, and placement of the return apertures 437 are provided to balance flow into the holding volume 28.

In some embodiments, a barrier 39 may be provided within the air handling compartment 29 to separate the location where the fan apertures 56 are provided from the lower area where the return apertures 437 are provided to allow for balanced air flow within the system.

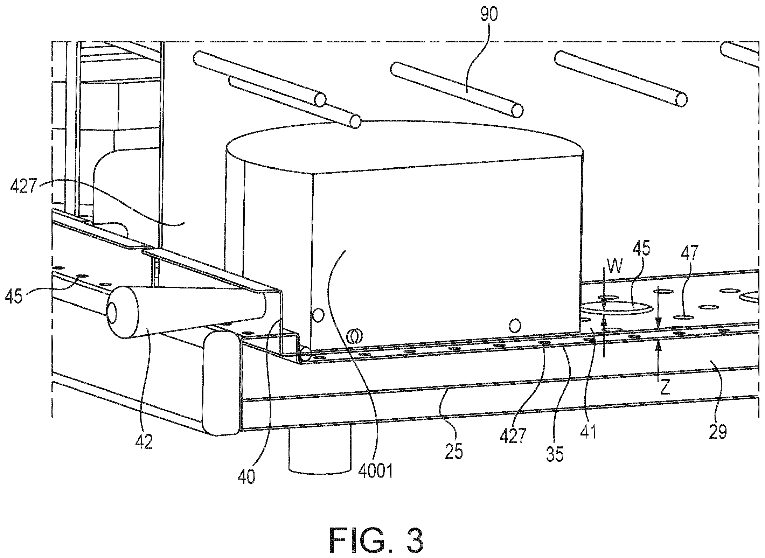

The inner lower wall 35 is best shown in FIG. 3 and forms the lower barrier within the holding volume 28. The inner lower wall 35 is spaced from the lower wall 25, and establishes a boundary of the air handling volume 29. The air handling volume 29 below the inner lower wall 35 is connected to the air handling volume 29 behind the inner rear wall 36 such that air that flows downwardly within the vertical portion of the air handling volume (i.e. below the fans and along the inner rear wall 36) turns into the air handling volume 29 below the inner lower wall 35, as urged by the higher pressure air from the fan 190 discharge.

The inner lower wall 35 includes a plurality of spaced apertures 427 that are disposed thereabout. In some embodiments, the plurality of spaced apertures 427 may be arranged in several different patterns.

In some embodiments, a first portion of the apertures 427 are arranged in multiple lines 1001, 1002, 1003 that extend in parallel to the right and left inner side walls 32, 33 and/or to the right and left edges 35a, 35b of the inner bottom wall 35. The lines 1001, 1002, 1003 are positioned to extend air flow along a front to back line that is positioned between holding portions (e.g. A, B, C, D) within the holding volume 28 to establish an air screen between the receipt areas, which are discussed below. In some embodiments, the apertures 427 that are aligned along the lines 1001, 1002, 1003 may have a larger diameter (or opening area if not circular) than other apertures 427 within the inner lower wall 35 to allow for a higher flow rate of air through the apertures aligned along the lines.

In some embodiments, another portion of the plurality of apertures 427 is arranged in a row 2002 located below, or within but close to, a front opening into the holding volume 28, such that the air flowing through the apertures along the front row 2002 establishes a wind screen across the front opening into the holding volume 28 (5003). The apertures 427 that establish the front row 2002 may have a larger diameter (or hole size if not circular) than other apertures 427 (such as, for example apertures 427 that are not a part of the multiple lines 1001, 1002, 1003 discussed above, to allow for sufficient air flow therethrough in view of the lower pressure air approaching the apertures forming the front row 2002 due to the relatively larger distance from the fans 190 than with other apertures 427 along the inner lower wall 35.

In some embodiments, remaining portions of the plurality of apertures 427 may be positioned between the multiple lines 1001, 1002, 1003, and outboard of the right and left outermost lines 1001, and 1003. The apertures 427 may be disposed in a grid (i.e. left to right and front to back rows - from the perspective of looking downward at the lower bottom wall 35) or in other geometric arrangements, such as concentric circles. The apertures 427 within the inner lower wall 35 establish the air flow into the holding volume as shown schematically by arrows 5002.

The plurality of apertures 427 may be arranged with two or all of the arrangements of apertures 427 discussed above.

The plurality of apertures 427 may be arranged with larger diameter (or aperture size if not circular) the further the specific aperture 427 is away from the fan 190 discharge to attempt to achieve uniform flow through all of the apertures (or at least uniform flow through apertures within the same geometric feature - such as the apertures within a specific line 1001.

The air flowing from the air handling volume 28 and into the holding volume 28 is provided for multiple purposes, such as to provide a heat input (or cooling input) to the food products disposed within the holding volume 28, to establish a wind screen at the front opening 27 into the holding volume 28, and to separate the various holding positions (A, B, C, D), discussed below, with air curtains - such as to avoid or minimize cross-contamination between the holding positions.

In some embodiments, the holding positions A, B, C and D may be separated along a portion of their entire height by parallel plates 50. The parallel plates 50 are positioned proximate to but not covering the apertures 427 that establish the lines 1001, 1002, 1003, 1004. The plates 50 provide a physical barrier between the holding positions to physically prevent air movement between the holding positions where they are provided. Air flows into the holding volume through the apertures 427 that are aligned along the lines 1001, 1002, 1003, and 1004 and flows across the plates 50 thereby providing convection heat transfer with the plate 50 surface to either heat or cool the plate, which results in convention heat transfer on the opposite side of the plate 50 within the respective holding portion A, B, C, D. In some embodiments, the plates 50 extend upwardly from a position in contact with or closely above the inner lower plate 35 only through a portion of the entire height of the holding volume 28 (with only an air curtain establishing a barrier between the holding portions above the plates 50), while in other embodiments the plates 50 extend upward along the entire height of the holding volume 28 to maintain a physical barrier between the holding portions.

The parallel plates 50 may be supported upon the inner lower wall 35 or by other structure within the housing 20.

The housing 20 is configured to receive a plurality of pans 40 that are slidably mounted within the holding volume 28. The pans 40 may be positioned such that each pan is disposed within each holding position A, B, C, D and is separately movable. In some embodiments, two separate pans 40 may extend into the same holding position.

The pans 40 each include a floor 41 (planar holding surface) and may include side walls 46a, 46b and/or a rear wall 49. When the pan is installed, the floor 41 of the pan may rest upon the inner lower surface 35, or alternatively, the floor may be set off above the inner lower surface 36 to allow for a gap Z therebetween (FIG. 3).

The floor 41 includes a plurality of protuberances 45 that are spaced thereon. Each protuberance is a raised portion that extends above a plane that extends through the remainder of the floor 41, such that a generally planar food product (such as a tortilla that lays relatively flat when supported on a surface, even if it is not geometrically planar) rests upon multiple of the protuberances 45 and therefore does not rest upon the floor 41 outboard of the protuberances 45. The protuberances extend upward a distance W (such as 5 mm, or such as 3, 7, or 10 mm, or any value within a range of about 3 mm to about 10 mm) to allow for air flow above the floor but below a generally planar food product that rests upon a plurality of protuberances 45. The height of the protuberances 45 (W) allows the food resting thereon to be spaced from the remainder of the floor 41 and therefore allows air that flows through the apertures 47 in the floor (discussed below) to flow below the food product and therefore heat/cool the bottom of the food product.

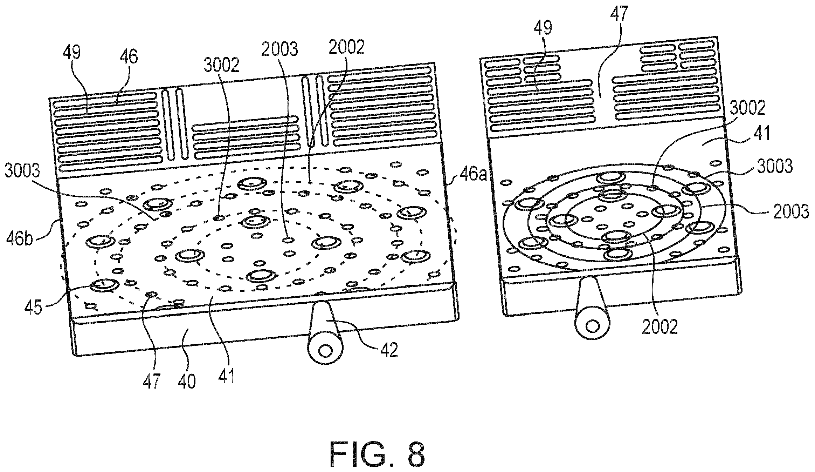

In some embodiments, the plurality of protuberances 45 may be arranged geometrically upon the floor 41. In one embodiment, the plurality of protuberances 45 may be arranged in multiple concentric circles 2002, 2003 (FIG. 8). For larger pans 40, additional protuberances 45 (other than those in the concentric circles) may be provided to provide further support and set off (W) for food products thereon. In some embodiments, a pan 40 may be arranged to hold two spaced apart food products - or stacks of food products - such as two neighboring stacks of tortillas - and therefore the floor 41 may include two separate arrangements of concentric circles of protuberances 43.

The floor 41 of the pan further may include a plurality of apertures 47 that are arranged to allow air to flow therethrough, and either past the food product provided upon the floor 41/protuberances 45 or into the set off W space between the floor 41 and the food product as established by the protuberances. The apertures may be arranged in concentric circles 3002, 3003, which may be concentrically spaced with respect to the concentric circles 2002, 2003 of protuberances 45. Additional apertures 47 may be provided other than the apertures that are disposed in the concentric circles 3002, 3003 as desired for suitable air flow through the floor.

One of ordinary skill in the art will appreciate, following a thorough review and understanding of the subject specification and figures, that the size and spacing of each of the plurality of protuberances and apertures 45, 47 upon the floor 41, and the placement of the apertures 427 upon the lower inner wall 35 is possible based upon only routine optimization based upon the desired food products to be supported upon the floor 41 and the desired air flow rate and air temperature within the housing.

The pan 40 may further include a rear wall 46 that extends above the floor and is parallel to the inner rear wall 36 when the pan 40 is installed. The rear wall 46 may include a plurality of holes or louvers 49 to allow air flow therethrough. The pan 40 may include side walls 44, 45 that extend in parallel to the plates 50 when the pan 40 is installed within the respective desired holding position A, B, C, D.

The housing 20 may further comprise one or more racks 90 that are disposed therein to support the pans 40 and/or to support food products spaced above the pans 40. In embodiments where the racks 90 support the pans, the racks 90 establish the gap Z as discussed above. The racks 90 may also extend above the pans 40 to support further food products, such as stored food products that are in inventory when the inventory within the pans lowers to requires replenishment. The air flow within the housing 20 (as discussed herein) may also flow past the food upon the upper racks 90.

In some embodiments, food products may be positioned within the holding volume 28 within pans 120 (4000), which may rest directly upon the trays 40 or upon the racks 90. In other embodiments, the food products may rest directly upon the tray 40 (4001).

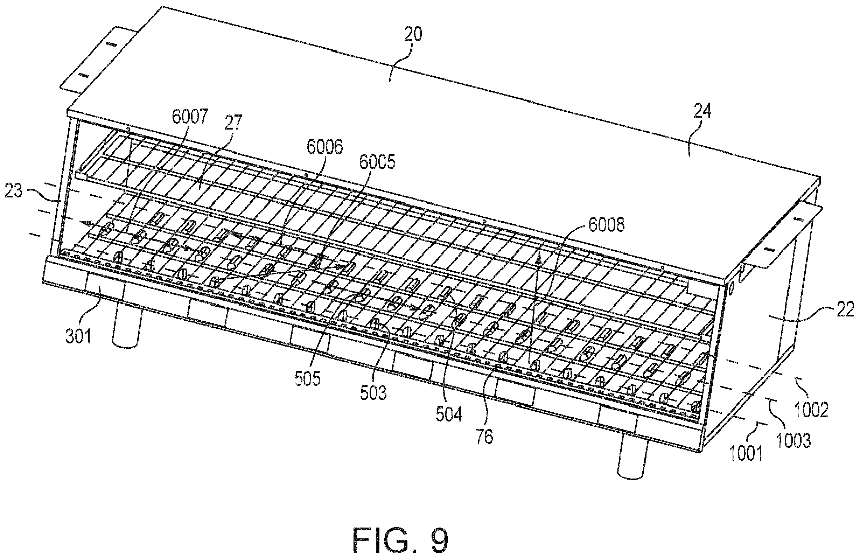

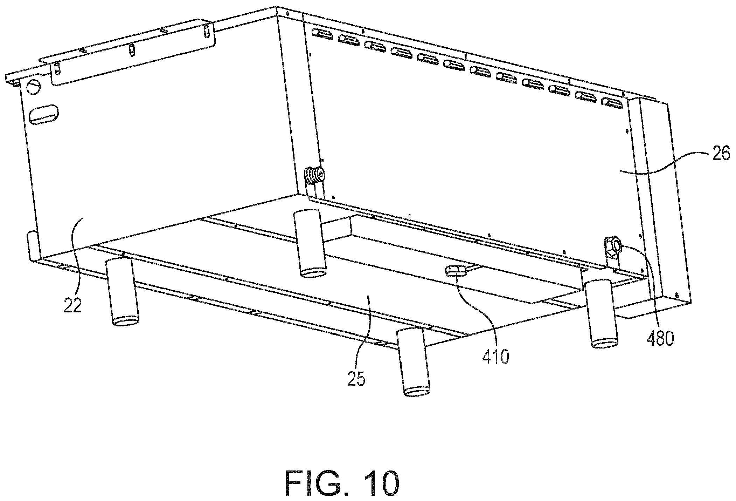

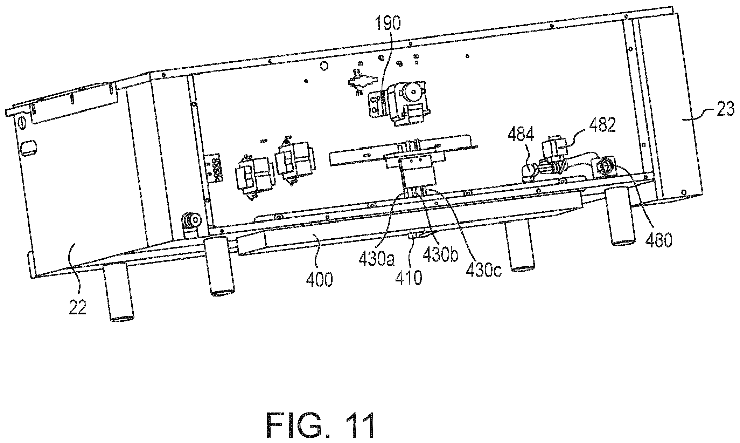

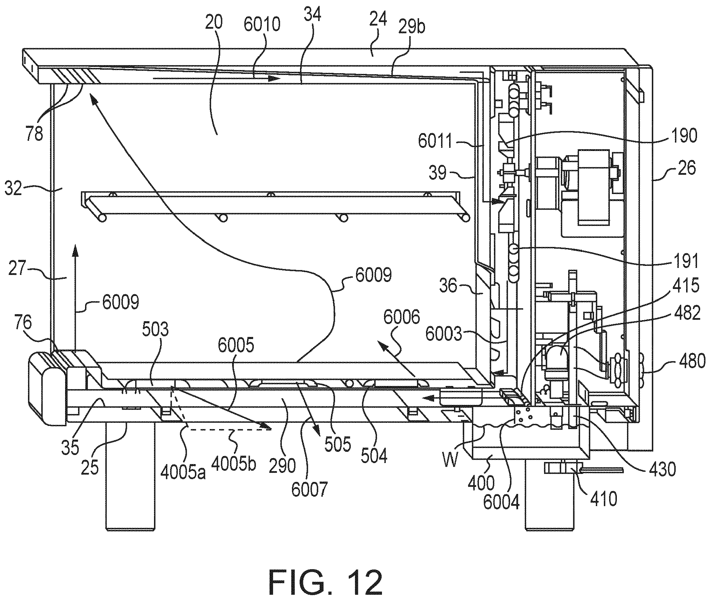

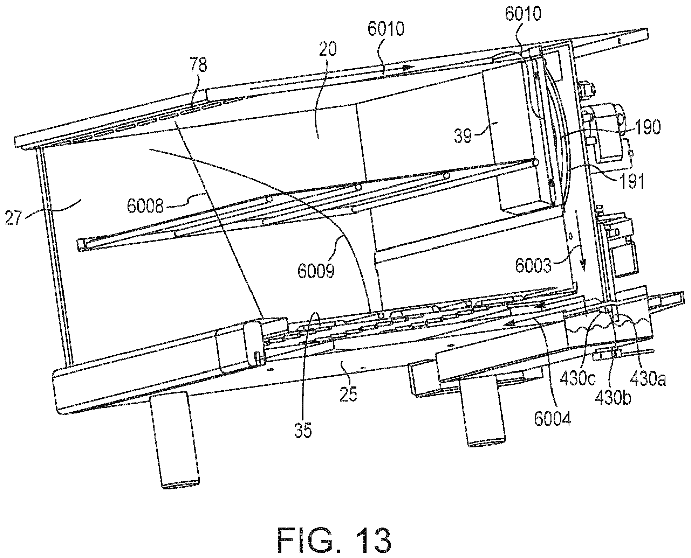

Turning now to FIGs. 9-13 another cabinet 300 is provided. the cabinet 300 is general constructed like cabinet 10. Unless specifically discussed herein, the description of cabinet 10 above is equally applicable to cabinet 300 and like numbers with respect to cabinet 10 are used in the description and depiction of cabinet 300. The cabinet 300 has the same functionality as cabinet 10 with the additions and changes discussed herein. The cabinet 300 includes the introduction of humid air or air with a relatively high water vapor content, which assists with keeping the food products (such as, for example, tortillas) moist, which may increase the time that the food products can be stored or maintain the quality of the food products as they are being stored.

The cabinet 300 has a housing 20 that is modified to support a storage volume 400 below lower wall 25 of the housing, or from another location that is in gaseous communication with the air handling volume 29 downstream of the discharge of the one or more fans 190. The storage volume is configured to store a volume of water therein. The storage volume 400 is configured to allow water vapor or humid air to enter into the air handling volume 29 and then flow into the holding volume 29 of the housing 20.

The storage volume 400 is configured to hold a pool of water W (schematic, FIG. X) with an air volume 429 above the pool W. The air volume can flow into the air handling volume 29 either by the natural flow or air, or in some embodiments, the storage volume 400 is positioned upon the housing 20 such that aperture(s) 415 allow for gaseous communication directly with the air handling volume 29. In some embodiments, the housing 20 may include a louver or a plurality of louvers 416 that is positioned above the aperture (or a plurality of apertures) 415 to cause the air flowing out of the storage volume 400 to leave the louver in a direction along the length of the air handling volume 29 and toward the front end portion of the housing 20.

In some embodiments, the storage volume 400 may include a nebulizer 410 that is positioned to interact with the water W located within the storage volume, such that during operation of the nebulizer, the water forms a vapor mist, which upon formation moves upwardly through the water W and into the air volume above the water level. The vapor mist flows toward the aperture(s) 415 and then into the air handling volume 29 where it is entrained with the flowing air therethrough to flow into the holding volume 28. The nebulizer 410 may be an known type of nebulizer known in the art, such as an ultrasonic wave nebulizer, a vibrating mesh nebulizer, or a mechanical mechanism that causes rapid vibrations that causes water vapor to form. Preferably the nebulizer 410 is operated with electrical power, and from the same electrical power source that powers the fan 190, the heaters 191, the controller, the display and the like.

The storage volume 400 is configured to be filled with water W with the assistance of a level sensor 430, which sends a signal that is representative of the water level, or is a signal when a low level is encountered, when a high level is encountered, and in some embodiments when an ultra-high level is encountered. In the embodiment depicted in the figures, three probes 430a, 430b, 430c extend into the Water and are configured to generate a signal when a portion (such as the lower end surface) of the probe is in contact with Water. Accordingly, the three probes can each generate a signal when in contact with water, which is sent to the controller 6000. The controller, when a low water level is generated, may cause water to flow into the storage volume 400 to raise the water level therein. In one embodiment, the lowest probe 430a is disposed with its end at the level that corresponds to the lowest desired water level. The controller is programmed such that when the probe 430a sends a signal that water is present (or in another embodiment when the probe 430a does not send a signal that water is not present) the controller does not allow replacement water into the storage volume 400. When the water level drops below the probe 430a the controller receives a signal from the probe 430a (or stops receiving a water present signal) and the controller causes water to flow into the storage volume 400 - as discussed below.

In this embodiment, the controller 6000 continues to allow water flow until the high level probe 430b, which has a water identification surface that is at a level of the highest desired water level within the storage volume 400 (or a level just below the highest desired level) the controller discontinues allowing water to enter into the storage volume 400. In some embodiments, the system may include a third probe 430c at an even higher level than the high level probe 430c, which causes the controller 6000 to initiate an alarm if the water level reaches the water identification surface of the third probe 430c.

In some embodiments, the housing 20 may be connected to a pressurized water source, such as a source of municipal water, via a hose connection 480 on an outer surface of the housing 20 (such as the outer rear wall). The hose connection 480 may be connected to a valve 482, which is opened by the controller 6000 when a low water level is identified, such as via the probe 430 discussed herein, and closed when the high level is reached as determined by the probe 430. The pressure within the water source causes the water to flow into the storage volume 400 when the valve is opened.

In other embodiments, the water level can be determined and signaled to the controller 6000 via other technologies such as measuring the static pressure at the bottom of the storage volume, by an optical level sensor, or the like.

As depicted in FIGs. 9-13, the cabinet 300 has a modified air flow path than the cabinet 10 discussed above. The cabinet 300 may include the storage volume 400 and water system discussed above, or in other embodiments does not include the storage volume 400 and water system. The cabinet 300 includes and air handling volume 29 that includes a first portion 29a that directs air into the holding volume 28 and a second suction portion 29b that receives air flowing from the holding volume 28 and directs the air to the intake of the fan 190. When the fan 190 is operating the air discharging from the fan 190 flows into the first portion 29a and to the plenum below the inner lower wall 35, as depicted with the arrow 6003. In embodiments, with the water storage volume 400, humid air 6004 flows into the first portion 29 with the air flowing from the fan.

The inner lower wall 35, in some embodiments, includes a plurality of apertures, associated with louvers 503, 504, 505 that allow air flow from the first plenum 29a to flow into the holding volume 28. In some embodiments, the louvers 503, 504, 505 are provided with different orientations, to direct the air entering the holding volume 28 to enter in different directions, which facilitates air flow around the holding volume 28 to interact with the food products that are disposed upon the different portions (shelves) within the holding volume, as discussed with respect to the above embodiment.

In the representative embodiment depicted in FIGs. 9-13, the inner lower wall 35 includes a first plurality of louvers 503 that are positioned with respect to each other along a first line 1001 that extends parallel to the rear wall 26 of the housing with the first louvers arranged from a position proximate to the left outer wall 23 to a position proximate to the right outer wall 22, with each of the first louvers 503 disposed proximate to the open front end 27 of the housing. A second plurality of louvers 504 are positioned with respect to each other along a second line 1002 that is parallel to the first line 1001, with each the plurality second louvers 504 positioned proximate to the rear wall 26 of the housing 20, with the second louvers arranged along the second line 1002 from a position proximate to the left outer wall 23 to a position proximate to the right outer wall 22. A third plurality of louvers 505 are positioned with respect to each other along a third line 1003, which is between the first and second lines 1001, 1002. The third louvers are arranged along the third line 1003 from a position proximate to the left outer wall 23 to a position proximate to the right outer wall 22.

In some embodiments, the louvers 503, 504, 505 are arranged to cause the air leaving the louver to enter the holding volume 28 to flow in specific directions. In the embodiment depicted in the figures, the plurality of louvers 504 along the second line 1002 are positioned to urge the air to flow in the direction of the left outer wall 22 (direction 6007), the plurality of louvers 505 along the third line 1003 are positioned to urge air to flow in the direction of the right outer wall 23 (direction 6006). The louvers 503 along the first line 1001 are positioned such that the air leaving the louver extends in a direction 6005 that has a horizontal vector component 6005a (i.e. either toward one of the left or right walls 23, 22) and a rearward vector component 6005b (i.e. toward the rear wall 26). In some embodiments, all of the first louvers 503 are positioned such that the air leaves the louver in the same direction, while in some embodiments, half the first louvers 503 (i.e. louvers on the side of the left wall 23) expel air in a direction with a vector component 6005a toward the left wall (and the vector component 6005b toward the rear wall), while the other half of the louvers (louvers on the side of the right wall 2) expel air in the direction with a vector component toward the right wall 22 (and the vector component 6005b toward the rear wall 26).

The housing 20 includes a second portion 29b that forms a plenum between the inner upper wall 34 and the outer upper wall 24. The plenum 29b allows air to flow to the suction of the fan 190 (flow path 6010). As depicted in the figures, the plenum 29b may lead to an enclosure 39 upon the inner rear wall 36 to direct the air into the fan (flow 6011), which is positioned just behind the inner rear wall 36 and below the majority of the plenum 29b. The second portion 29b may include a plurality of intake holes 78 that face downwardly toward the opening 27 into the holding volume 28. The holes 78 are proximate to the front end of the housing, i.e. above the opening 27 into the holding volume 28. The intake holes 78 allow air to flow from the holding volume 28 and into the second portion 29b. The holes 78 may be arranged in a pattern to allow air from across the width (between inner left and right walls 32, 33) of the holding volume 28 to enter into the plenum. The holes 78 may be disposed in a single row and disposed at consistent spaces from adjacent holes 78 along the row. In other embodiments, the holes may be arranged in multiple rows, such as three rows as depicted in the figures. The holes 78 may be arranged such that each hole is aligned with a space between neighboring holes in an adjacent row or with other patterns that are known to promote air flow therethrough - due to the suction force of the fan 190 communicated into the second portion 29a to the holes 78.

The housing 20 may include a plurality of holes 76 that are positioned to allow air to leave the first plenum 29a to flow upwardly across the opening 27 into the housing 20 as shown schematically with air flow 2008. The holes 76 may be provided in a single row, multiple rows (as depicted in the figures) or in a pattern that does not include geometric rows.

The air that flows into the holding volume 28 from the louvers 503, 504, 505 flows past the food products positioned within the housing (and disposed within the housing 20 as discussed with respect to the embodiment discussed above). The flow from the louvers eventually flows into the upper holes 78 and into the upper plenum 29b as shown schematically with arrow 6009. The air curtain formed from air from the holes 76 also flows through the upper holes 78 and into the second plenum 29b.

The housing may include a plurality of displays 300 and inputs 301, which may be associated with each holding portion. The display 300 may provide information, such as a timer, measured temperature within the holding portion, items from a recipe, inventory levels within the holding portion, as well as other items. The inputs 301 may be provided to allow the user to perform various functions, e.g. set a timer, set desired temperatures for the holding portions, set a recipe for, allow the user to identify when steps of a recipe have been completed, and for the user to set inventory information - such as to input the number of certain food products that are placed within the holding portion as well as to identify when one or more food products have been removed from the holding portion. In some embodiments, the holding portions may include localized heaters that may be operated by a controller to assist with maintaining local temperature within the holding portion as desired (in addition to the temperature effects from the air flow through the holding portion and across the dividers as discussed herein. In this embodiment, the local temperature sensors may be provided within one or more holding portions, with the controller operating the localized heaters, using feedback control to maintain the temperature within the holding portion as desired. The controller may operate based upon the user operating the input 301. Additionally or alternatively, the controller 6000 (FIG. 2) may communicate with a remote input system, such as a local or remote computer or an app on a mobile device or tablet to control the temperature within the heating portion. The controller may also communicate with the remote input system for inventor control purposes or for recipe purposes. The method of communication may be via a wired connection, a cell signal, Wi-Fi, Bluetooth or via other communication systems known in the art or to be implemented that are capable of communicating data.

The displays 300 and inputs 301 (and remote inputs that communicate with the controller as discussed above) may be include separate operation for the two or more separate locations within each holding portion, i.e. when first food items rest upon the pan 40 and other food items rest upon the shelves 90 above the pan 40.

The term "about" is specifically defined herein to include a range that includes the reference value and plus or minus 5% of the reference value. The term "substantially the same" is satisfied when the width of the end surfaces of the holes are both within the above range.

While the preferred embodiments of the disclosed have been described, it should be understood that the invention is not so limited and modifications may be made without departing from the disclosure. The scope of the disclosure is defined by the appended claims, and all devices that come within the meaning of the claims, either literally or by equivalence, are intended to be embraced therein.

The specification as contemplated by the applicant can be best understood with reference to the following representative paragraphs:
Representative Paragraph 1: A cabinet for holding a plurality of food products, the cabinet comprises:
   a housing that is formed with a plurality of outer walls, the plurality of outer walls include left and right walls, an upper wall, a lower wall, and a rear wall, the housing establishes a holding volume and an air handling volume;
   a front opening that allows communication into the holding volume,
   the holding volume includes a plurality of discrete holding areas, wherein each of the discrete holding areas are configured to receive a food product therein;
   the housing forms an air flow path that draws suction from the holding volume, directs air through the air handling volume, and returns air to the holding volume;
   the housing includes an inner bottom wall that is spaced from the lower wall to allow air to flow therethrough, the inner bottom wall includes a plurality of apertures to direct air to return to the holding volume from the air handling volume, wherein a first set of the plurality of apertures are aligned along a first line that extends in parallel to the left and right walls and a second set of the plurality of apertures that are aligned along a second line that extends in parallel to the left and right walls, wherein the first and second line are spaced from each other, and wherein the first line is positioned closer to the left wall than the right wall, and wherein the second line is positioned closer to the right wall that the left wall.
Representative Paragraph 2: The cabinet for holding a plurality of food products of Representative Paragraph 1, further comprising a plurality of pans that can be slidably received within the holding volume, each of the plurality of pans includes a planar holding surface and one or more side walls, wherein the holding surface includes a plurality of protuberances that extend upwardly from the planar holding surface to establish a set off distance between planar food products that rest upon the plurality of protuberances and the holding surface.
Representative Paragraph 3: The cabinet for holding a plurality of food products of Representative Paragraph 2, wherein the plurality of protuberances are arranged in a plurality of concentric circles.
Representative Paragraph 4: The cabinet for holding a plurality of food products of Representative Paragraph 3, wherein the holding surface of each of the plurality of pans includes a plurality of apertures, wherein the plurality of apertures upon each holding surface are arranged to form one or more circles that are concentric with the plurality of concentric circles of the plurality of protuberances.
Representative Paragraph 5: The cabinet for holding a plurality of food products of any one of representative paragraphs 1-4, wherein the air that flows through the plurality of apertures flows from the space between the lower wall and the inner bottom wall from the air handling volume.
Representative Paragraph 6: The cabinet for holding a plurality of food products of Representative Paragraph 5, wherein the air that flows through the plurality of apertures flows from the space between the lower wall and the inner bottom wall from the air handling volume.
Representative Paragraph 7: The cabinet for holding a plurality of food products of any one of Representative Paragraphs 2-6, wherein each of the plurality of pans includes a rear wall that faces and is parallel with a rear interior wall of the holding cabinet when each pan is installed, wherein the rear wall in each of the plurality of pans includes one or more apertures to allow air to pass therethrough.
Representative Paragraph 8: The cabinet for holding a plurality of food products of any one of Representative Paragraphs 1-7, wherein the air handling volume includes at least one fan, wherein the at least one fan takes suction from the holding volume and discharges air into the air handling volume.
Representative Paragraph 9: The cabinet for holding a plurality of food products of Representative Paragraph 8, wherein the air handling volume further comprises a set of walls that direct flow from each of the plurality of fans toward the lower wall, wherein a portion of the air flowing from the plurality of fans is directed to a space between the lower wall and the inner bottom wall, and a remaining portion of the air is directed through the inner rear wall that is forms a barrier of the holding volume and into the holding volume, wherein the plurality of fans take suction from the holding volume through the inner rear wall.
Representative Paragraph 10: The cabinet for holding a plurality of food products of any one of Representative Paragraphs 1-9, wherein the housing further comprises one or more horizontal shelves that are spaced from the bottom inner wall.
Representative Paragraph 11: The cabinet of any one of Representative Paragraphs 1-10, further comprising a storage volume provided upon the housing and in gaseous communication with the air handling volume, wherein the storage volume is configured to receive and store water therewithin, wherein the storage volume is further configured to create a humid environment with water vapor traveling into the air handling volume.
Representative Paragraph 12: The cabinet of Representative Paragraph 11, wherein the storage volume supports a nebulizer that interacts with the with water stored therein, wherein operation of the nebulizer creates the humid environment within the air within the storage volume above the water.
Representative Paragraph 13: The cabinet of either one of Representative Paragraphs 11 or 12, wherein the storage volume receives a level probe, wherein the level probe can identify a low water level condition thereby causing more water to be directed into the storage volume and the level probe can identify a high water level condition that stops water from being directed into the storage volume.
Representative Paragraph 14: The cabinet of any one of Representative Paragraphs 11-13, further comprising a heater disposed within the storage volume to interact with the water disposed within the storage volume.
Representative Paragraph 15: The cabinet of any one of Representative Paragraphs 1-14, wherein the air handing volume includes at least one fan, wherein the at least one fan takes suction from air that flows into the air handling volume from the holding volume, wherein during fan operation air flows across an opening in communication with the storage volume, wherein air flow across the opening causes relatively air from the storage volume to mix with the air flowing across the opening and be urged to reenter the air handling volume.
Representative Paragraph 16: A cabinet for holding a plurality of food products, the cabinet comprises:
   a housing that is formed with a plurality of outer walls, the plurality of outer walls include left and right walls, an upper wall, a lower wall, and a rear wall, the housing establishes a holding volume and an air handling volume;
   a front opening that allows communication into the holding volume,
   the holding volume includes a plurality of discrete holding areas, wherein each of the discrete holding areas are configured to receive a food product therein;
   the housing forms an air flow path that draws suction from the holding volume, directs air through the air handling volume, and returns air to the holding volume, wherein a portion of the return air into the holding volume establishes a wind screen across a front opening of the holding volume;
   the housing includes an inner bottom wall that is spaced from the lower wall to allow air to flow therethrough, the inner bottom wall includes a plurality of apertures to direct air to return to the holding volume from the air handling volume, wherein a first set of the plurality of apertures are aligned along a first line that extends in parallel to the left and right walls and a second set of the plurality of apertures that are aligned along a second line that extends in parallel to the left and right walls, wherein the first and second line are spaced from each other, and wherein the first line is positioned closer to the left wall than the right wall, and wherein the second line is positioned closer to the right wall that the left wall; and
   a plurality of pans that can be slidably received within the holding volume, each of the plurality of pans includes a planar holding surface and one or more side walls, wherein the holding surface includes a plurality of protuberances that extend upwardly from the planar holding surface to establish a set off distance between planar food products that rest upon the plurality of protuberances and the holding surface, wherein the plurality of protuberances are arranged in a plurality of concentric circles.
Representative Paragraph 17: The cabinet for holding a plurality of food products of Representative Paragraph 16, wherein the holding surface of each of the plurality of pans includes a plurality of apertures, wherein the plurality of apertures upon each holding surface are arranged to form one or more circles that are concentric with the plurality of concentric circles of the plurality of protuberances.
Representative Paragraph 18: The cabinet for holding a plurality of food products of either one of Representative Paragraphs 17 or 18, wherein the air that flows through the plurality of apertures flows from the space between the lower wall and the inner bottom wall from the air handling volume.
Representative Paragraph 19: The cabinet for holding a plurality of food products of Representative Paragraph 18, wherein the air that flows through the plurality of apertures flows from the space between the lower wall and the inner bottom wall from the air handling volume.
Representative Paragraph 20: The cabinet for holding a plurality of food products of any one of Representative Paragraphs 16-19, wherein each of the plurality of pans includes a rear wall that faces and is parallel with a rear interior wall of the holding cabinet when each pan is installed, wherein the rear wall in each of the plurality of pans includes one or more apertures to allow air to pass therethrough.
Representative Paragraph 21: The cabinet for holding a plurality of food products of any one of Representative Paragraphs 16-20, wherein the air handling volume includes a plurality of fans, wherein each of the plurality of fans takes suction from the holding volume and discharges air into the air handling volume.
Representative Paragraph 22: The cabinet for holding a plurality of food products of Representative Paragraph 21, wherein the air handling volume further comprises a set of walls that direct flow from each of the plurality of fans toward the lower wall, wherein a portion of the air flowing from the plurality of fans is directed to a space between the lower wall and the inner bottom wall, and a remaining portion of the air is directed through the inner rear wall that is forms a barrier of the holding volume and into the holding volume, wherein the plurality of fans take suction from the holding volume through the inner rear wall.
Representative Paragraph 23: The cabinet for holding a plurality of food products of any one of Representative Paragraphs 16-22, wherein the housing further comprises one or more horizontal shelves that are spaced from the bottom inner wall.
Representative Paragraph 24: The cabinet of any one of Representative Paragraphs 16-23, further comprising a storage volume provided upon the housing and in gaseous communication with the air handling volume, wherein the storage volume is configured to receive and store water therewithin, wherein the storage volume is further configured to create a humid environment with water vapor traveling into the air handling volume.
Representative Paragraph 25: The cabinet of Representative Paragraph 24, wherein the storage volume supports a nebulizer that interacts with the with water stored therein, wherein operation of the nebulizer creates the humid environment within the air within the storage volume above the water.
Representative Paragraph 26: The cabinet of Representative Paragraph 25 wherein the storage volume receives a level probe, wherein the level probe can identify a low water level condition thereby causing more water to be directed into the storage volume and the level probe can identify a high water level condition that stops water from being directed into the storage volume.
Representative Paragraph 27: The cabinet of Representative Paragraph 25, further comprising a heater disposed within the storage volume to interact with the water disposed within the storage volume.
Representative Paragraph 28: The cabinet of any one of Representative Paragraphs 16-27, wherein the air handing volume includes at least one fan, wherein the at least one fan takes suction from air that flows into the air handling volume from the holding volume, wherein during fan operation air flows across an opening in communication with the storage volume, wherein air flow across the opening causes relatively air from the storage volume to mix with the air flowing across the opening and be urged to reenter the air handling volume.
Representative Paragraph 29: A cabinet for holding a plurality of food products, the cabinet comprises:
   a housing that is formed with a plurality of outer walls, the plurality of outer walls include left and right walls, an upper wall, a lower wall, and a rear wall, the housing establishes a holding volume and an air handling volume;
   a front opening that allows communication into the holding volume,
   the holding volume includes a plurality of discrete holding areas, wherein each of the discrete holding areas are configured to receive a food product therein;
   the housing forms an upper flow path that draws suction from the holding volume, directs air through the air handling volume, and returns air to the holding volume;
   the housing includes an inner bottom wall that is spaced from the lower wall to allow air to flow therethrough, the inner bottom wall includes a plurality of apertures to direct air to return to the holding volume from the air handling volume, wherein each of the plurality of apertures are in communication with a louver that directs air flowing into the holding volume in a specific direction,
   further comprising a storage volume provided upon the housing and in gaseous communication with the air handling volume, wherein the storage volume is configured to receive and store water therewithin, wherein the storage volume is further configured to create a humid environment with water vapor traveling into the air handling volume.
Representative Paragraph 30: The cabinet of Representative Paragraph 29, wherein the storage volume supports a nebulizer that interacts with the with water stored therein, wherein operation of the nebulizer creates the humid environment within the air within the storage volume above the water.
Representative Paragraph 31: The cabinet of Representative Paragraph 30 wherein the storage volume receives a level probe, wherein the level probe can identify a low water level condition thereby causing more water to be directed into the storage volume and the level probe can identify a high water level condition that stops water from being directed into the storage volume.
Representative Paragraph 32: The cabinet of any one of Representative Paragraphs 29-31, further comprising a heater disposed within the storage volume to interact with the water disposed within the storage volume.
Representative Paragraph 33: The cabinet of any one of Representative Paragraphs 29-32, wherein the air handing volume includes at least one fan, wherein the at least one fan takes suction from air that flows into the air handling volume from the holding volume, wherein during fan operation air flows across an opening in communication with the storage volume, wherein air flow across the opening causes relatively air from the storage volume to mix with the air flowing across the opening and be urged to reenter the air handling volume.
Representative Paragraph 34: The cabinet of any one of Representative Paragraphs 29-33, wherein the plurality of apertures are organized to be positioned along three parallel lines that each extend from proximate to the outer left wall to proximate to the outer right wall, wherein a first of the lines is positioned proximate to the front opening of the holding volume, a second is positioned proximate to the rear wall, and a third that is positioned between the first and second lines;
   wherein the louvers associated with each of the plurality of apertures along the first line are each positioned to direct air that leaves the louver into the holding volume with a vector component that is parallel to the first line and also with a vector component that is pointed toward the rear wall, wherein the louvers associated with each of the plurality of apertures along the second line are positioned to direct air that leaves the louver into the holding volume in a direction toward one of the right or left outer walls, and the louvers associated with each of the plurality of apertures along the second line are positioned to direct air that leaves the louver into the holding volume in a direction toward the other of the right or left outer walls.
Representative Paragraph 35: The cabinet of any one of Representative Paragraphs 29-34, wherein a front end portion of the inner bottom wall comprises a plurality of first apertures that are each aligned along a line that extends from proximate to the outer left wall to proximate to the outer right wall, with each of the plurality of first apertures being adjacent to the front opening;
   wherein the housing further includes an inner upper wall that is spaced from the upper wall of the housing to allow air flow therethrough to establish the upper flow path, wherein a front end portion of the inner upper wall comprises a plurality of second apertures that are spaced adjacently in a pattern between a position adjacent to the outer left wall and a position adjacent to the outer right wall, wherein the air flowing through the plurality of second apertures flows into the upper flow path;
   wherein the upper flow path extends to a suction of a fan, wherein when operating the fan urges air to flow into the upper flow path, wherein air from each of the plurality of louvers and air from the plurality of first apertures flows into the plurality of second apertures.

## Claims

1. A cabinet for holding a plurality of food products, the cabinet comprises:
a housing that is formed with a plurality of outer walls, the plurality of outer walls include left and right walls, an upper wall, a lower wall, and a rear wall, the housing establishes a holding volume and an air handling volume;
a front opening that allows communication into the holding volume,
the holding volume includes a plurality of discrete holding areas, wherein each of the discrete holding areas are configured to receive a food product therein;
the housing forms an upper flow path that draws suction from the holding volume, directs air through the air handling volume, and returns air to the holding volume;
the housing includes an inner bottom wall that is spaced from the lower wall to allow air to flow therethrough, the inner bottom wall includes a plurality of apertures to direct air to return to the holding volume from the air handling volume, wherein each of the plurality of apertures are in communication with a louver that directs air flowing into the holding volume in a specific direction,
further comprising a storage volume provided upon the housing and in gaseous communication with the air handling volume, wherein the storage volume is configured to receive and store water therewithin, wherein the storage volume is further configured to create a humid environment with water vapor traveling into the air handling volume.

2. The cabinet of claim 1, wherein the storage volume supports a nebulizer that interacts with the with water stored therein, wherein operation of the nebulizer creates the humid environment within the air within the storage volume above the water.

3. The cabinet of either one of claims 1 or 2 wherein the storage volume receives a level probe, wherein the level probe can identify a low water level condition thereby causing more water to be directed into the storage volume and the level probe can identify a high water level condition that stops water from being directed into the storage volume.

4. The cabinet of any one of claims 1-3, further comprising a heater disposed within the storage volume to interact with the water disposed within the storage volume.

5. The cabinet of any one of claims 1-4, wherein the air handing volume includes at least one fan, wherein the at least one fan takes suction from air that flows into the air handling volume from the holding volume, wherein during fan operation air flows across an opening in communication with the storage volume, wherein air flow across the opening causes relatively air from the storage volume to mix with the air flowing across the opening and be urged to reenter the air handling volume.

6. The cabinet of any one of claims 1-5, wherein the plurality of apertures are organized to be positioned along three parallel lines that each extend from proximate to the outer left wall to proximate to the outer right wall, wherein a first of the lines is positioned proximate to the front opening of the holding volume, a second is positioned proximate to the rear wall, and a third that is positioned between the first and second lines;
wherein the louvers associated with each of the plurality of apertures along the first line are each positioned to direct air that leaves the louver into the holding volume with a vector component that is parallel to the first line and also with a vector component that is pointed toward the rear wall, wherein the louvers associated with each of the plurality of apertures along the second line are positioned to direct air that leaves the louver into the holding volume in a direction toward one of the right or left outer walls, and the louvers associated with each of the plurality of apertures along the third line are positioned to direct air that leaves the louver into the holding volume in a direction toward the other of the right or left outer walls than the outer wall that the louvers along the second line directed air to.

7. The cabinet of any one of claims 1-5, wherein the plurality of apertures are organized to be positioned along a plurality of parallel lines that each extend from proximate to the outer left wall to proximate to the outer right wall, wherein a first line of the plurality of parallel lines is positioned proximate to the front opening of the holding volume and a second line of the plurality of parallel lines is positioned proximate to the rear wall,
wherein the louvers associated with each of the plurality of apertures along the first line are each positioned to direct air that leaves the louver into the holding volume in a direction toward one of the right or left walls and the louvers associated with each of the apertures along the second line are positioned to direct air that leaves the louver into the holding volume in a direction toward the other of the right or left outer walls.

8. The cabinet of any one of claims 1-5, wherein the plurality of apertures are organized to be positioned along a plurality of parallel lines that each extend from proximate to the outer left wall to proximate to the outer right wall, wherein a first line of the plurality of parallel lines is positioned proximate to the front opening of the holding volume and a second line of the plurality of parallel lines is positioned proximate to the rear wall,
wherein the louvers associated with each of the plurality of apertures along the first line are each positioned to direct air that leaves the louver into the holding volume with a vector component that is parallel to the first line and also with a vector component that is pointed toward the rear wall, wherein the louvers associated each of the plurality of apertures along the second line are positioned to direct air that leaves the louver into the holding volume in a direction toward one of the right or left outer walls.

9. The cabinet of any one of claims 1-8, wherein a front end portion of the inner bottom wall comprises a plurality of first apertures that are each aligned along a line that extends from proximate to the outer left wall to proximate to the outer right wall, with each of the plurality of first apertures being adjacent to the front opening;
wherein the housing further includes an inner upper wall that is spaced from the upper wall of the housing to allow air flow therethrough to establish the upper flow path, wherein a front end portion of the inner upper wall comprises a plurality of second apertures that are spaced adjacently in a pattern between a position adjacent to the outer left wall and a position adjacent to the outer right wall, wherein the air flowing through the plurality of second apertures flows into the upper flow path;
wherein the upper flow path extends to a suction of a fan, wherein when operating the fan urges air to flow into the upper flow path, wherein air from each of the plurality of louvers and air from the plurality of first apertures flows into the plurality of second apertures.

10. The cabinet of any one of claims 1-9, further comprising a plurality of pans that can be slidably received within the holding volume, each of the plurality of pans includes a planar holding surface and one or more side walls, wherein the holding surface includes a plurality of protuberances that extend upwardly from the planar holding surface to establish a set off distance between planar food products that rest upon the plurality of protuberances and the holding surface.

11. The cabinet of claim 10, wherein the plurality of protuberances are arranged in a plurality of concentric circles.

12. The cabinet of claim 11, wherein the holding surface of each of the plurality of pans includes a plurality of apertures, wherein the plurality of apertures upon each holding surface are arranged to form one or more circles that are concentric with the plurality of concentric circles of the plurality of protuberances.

13. The cabinet for holding a plurality of food products of any one of representative paragraphs 1-12, wherein the air that flows through the plurality of apertures flows from the space between the lower wall and the inner bottom wall from the air handling volume.
